Europäisches Patentamt

(19) European Patent Office

Office européen des brevets

(11) EP 0 585 512 B1

(12) **EUROPEAN PATENT SPECIFICATION**

(45) Date of publication and mention
of the grant of the patent:
**13.01.1999 Bulletin 1999/02**

(51) Int. Cl.$^6$: **C08F 10/00**, C08F 4/656,
C08F 4/658

(21) Application number: **92870137.4**

(22) Date of filing: **31.08.1992**

(54) **Process for the preparation of an olefin polymerization catalyst component**

Katalysatorkomponente für Olefinpolymerisation

Procédé de préparation d'un composant de catalyseur pour polymérisation d'oléfines

(84) Designated Contracting States:
**BE DE FR GB IT NL**

(43) Date of publication of application:
**09.03.1994 Bulletin 1994/10**

(73) Proprietor: **FINA RESEARCH S.A.**
**B-7181 Feluy (BE)**

(72) Inventors:
• **Brems, Patrick**
**B-3390 Tielt-Winge (BE)**
• **Debras, Guy**
**B-6210 Les Bons Villers (BE)**

(56) References cited:
• **DATABASE WPIL Derwent Publications Ltd.,**
**London, GB; AN 93-047482**
• **DATABASE WPIL Derwent Publications Ltd.,**
**London, GB; AN 92-178679**

## Description

The present invention relates to a process for the preparation of a component of a catalyst for the (co)polymerization of alpha-olefins, and more particularly to a process for the preparation of a new type of supported Ziegler-Natta catalyst. More particularly the present invention concerns a process for the preparation of a supported Ziegler-Natta catalyst which comprises metallocene polymerization sites in addition to the usual polymerization sites.

It is known in the art that the mechanical properties of polyolefins improve with higher molecular weight. However, the processability of the polymers are improved when the distribution of the molecular weight is sufficiently broad so as to include low molecular weight.

Generally in order to meet all these properties, it is known to use either two reactions in series or two types of catalyst so as to broaden the molecular weight distribution. There is therefore a need in the art for specific polymerization catalyst which can meet all these specifications without requiring either two reactions or two catalytic systems.

Japanese Patent JP-A-4, 085, 306 discloses a process for preparing an olefin polymerization catalyst comprising

A)- a solid component obtained from a carrier containing hydroxy groups and Si, Al, or Mg, a group IV B transition metal halide and an organo metal compound, and
B)- an alkyl aluminoxane.

It is therefore an object of the present invention to provide a process for preparing a new type of supported Ziegler-Natta catalyst comprising two types of polymerization sites.

It is also an object of the present invention to provide a process for preparing said new type of supported Ziegler-Natta catalyst comprising Me-Cl bond polymerization sites and metallocene polymerisation site of the type Me-L wherein L is a ligand, and Me a transition metal of Group IVb.

It is also an object of the present invention to provide a process for preparing said new type of supported Ziegler-Natta catalyst by converting Me-Cl bond polymerization sites of usual Ziegler-Natta catalyst into Me-L bond metallocene polymerization sites.

The present invention provides a process for preparing an olefin polymerization catalyst component which comprises the step of :

- contacting a supported Ziegler-Natta catalyst component comprising a halogen derivative of a transition metal (Me) of Group IVb supported on a finely divided halogen derivative of Mg with a solution of an organometallic compound of general formula

$$L_x E_y R_z$$

wherein

L is an organic ligand which comprises a cyclopentadienyl, an indenyl, a fluorenyl or substituted derivates thereof,

E is a metallic, non-metallic or amphoteric element of group IIA, IIIA, IVA, or VA of the periodic table,

R is an aliphatic, cycloaliphatic, aromatic, polyaromatic or heterocyclic group.

and wherein x, y, z are integers, the value of which is comprised between 0 and 4 with the proviso that x and y are comprised between 1 and 4,

under reaction conditions comprising a temperature comprised between -80°C and 220°C,

- forming Me-L bonds in replacement of Me-Hal bonds so as to obtain Me/L ratio comprised between 0.15 and 18.

- recovering the catalyst component so obtained.

In accordance with the process of the present invention, the transition metal used in the Ziegler-Natta catalyst is preferably titanium. The Ziegler-Natta catalyst may also be prepared with a usual internal electon donor. Examples of internal electron donors include esters, ethers, alcohols, ketones, amines, nitriles, carboxylic acids and are described in European Patent Application 88901847.3 published under the number 0303704. The Ziegler-Natta catalyst used in the process of the invention contains Me-Halogen bonds, preferably Ti-Halogen or Ti-Cl bonds. Typical Ziegler-Natta catalysts are described in European Patent Application 0303704. Said Ziegler-Natta catalyst is contacted with a ligand precursor of general formula $L_x E_y R_z$

Preferably L represents a cyclopentadienyl or a trialkylsilyl substituted derivative thereof; E represents preferably Na, Si, Sn or P while R is preferably a hydrocarbon radical of 1 to 4 carbon atoms or a phenyl group.

Preferably x is 1, y is 1 and z is 0 or 3.

The process provided in the present invention for the preparation of said olefin polymerization catalyst component consists of performing a substitution reaction of a magnesium supported Ziegler-Natta catalyst with the L-ligand-precursor of the present invention.

According to the present invention this substitution reaction can be effected in the presence or not of the alkylaluminium cocatalyst, either separately or in situ in the reactor in the presence of the alpha-olefin monomer. The substitution reaction of the magnesium supported Ziegler-Natta catalyst can be effected in gas phase or in slurry conditions, the latter using hydrocarbon, halocarbon, aromatic or haloaromatic solvents, especially an aliphatic hydrocarbon liquid or liquified gas. The L-ligand-precursor can be used either pure or in same solvents as above, whether or not in the presence of the alkylaluminium cocatalyst component.

The reaction resulting from the contact between a Mg supported Ziegler-Natta catalyst containing also titanium as transition metal and chlorine as essential ingredients with L-ligand-precursor to form Ti-L bonds can be carried out at any stoechiometric ratio of Ti/L, between $18 \geq Ti/L \geq 0.15$, preferably between 1 and 12 and is generally performed at temperatures between -80°C and 220°C, preferably between 50°C and 100°C.

The present invention also provides for a process for polymerizing alpha-olefins in the presence of catalyst component comprising Me-L bond as described hereunder. Such a process is carried out in the presence of a catalyst system comprising the catalyst component containing Me-L bonds, an organo-aluminium cocatalyst - and optionally an external electron donor - , used for the polymerization of alpha-olefins under conditions typical for Ziegler-Natta polymerizations. The catalyst system can be employed in a gas phase process, single phase melt process, solvent process or slurry process. The catalyst system is usefully employed in the polymerization of ethylene and other alpha-olefins having 3 to 20, preferably 3 to 8, carbon atoms and copolymerization of these with other 1-olefins or diolefins having from 2 to 20 carbon atoms, such as propylene, butene, pentene and hexene, butadiene, 1,4-pentadiene, 4-Me-1-pentene so as to form copolymers of low and medium densities. The catalyst system is particularly useful for the polymerization of ethylene and copolymerization of ethylene with other alpha-olefins in slurry processes.

Applicants have unexpectedly found that polymerization of alpha-olefins in the presence of the catalyst of the invention results in a higher polymerization activity per unit quantity of the catalyst component.

The following examples are given to better illustrate the present invention but without however limiting its scope.

## Example 1

Preparation of solid catalyst component **M1**

A typical heterogeneous $MgCl_2$-supported Ziegler Ti-catalyst **U**, contg. 16.9 wt% Ti, 7.3 wt% Mg, 65.2 wt% Cl, and < 10 wt% diisobutylphtalate as an internal electon donor, (5 grams), was treated with a pentane solution of cyclopentadienyltrimethylsilane (CpTMS) (10 mL 15% solution), and then with nitrogen on a fluidized bed at 65°C to complete the reaction and to purge out the evolved chlorotrimethylsilane (TMSCl), in order to substitute part of the Ti-Cl bonds on the catalyst surface at Ti/Cp ratio equal to 2. The evolved TMSCl was detected in the off- gas by means of wet pH test paper, to follow completion of the substitution reaction. After 18 hrs, the resulting modified catalyst (**M1**) was collected. All manipulations were carried out under an atmosphere of inert gas ($N_2$).

## Example 2

Preparation of solid catalyst component **M2**

A preparation identical to example 1 was followed, except that catalyst **U** was treated with a 7.5% pentane solution of CpTMS (10 mL). After completion of the reaction, the resulting modified catalyst (**M2**), containing a Ti/Cp ratio equal to 4, was collected.

## Example 3

Ethylene polymerization with **M1** as a solid catalyst component

A Büchi reactor (2 L) is filled with hydrogen (5 Nl), isobutane (0.75 l) and ethylene until a final reactor pressure of 30 bars is reached. Then a mixture of 10 mg **M1** catalyst (suspension in 4 mL mineral oil) and triisobutylaluminium (TIBAL) (2 mmole) (25 wt% solution in toluene), precontacted for 30 seconds, is introduced into the reactor, by means of a second amount of isobutane (0.25 l). The polymerization is carried out at 90°C under a constant ethylene pressure of 35 bars. After the polymerization was stopped, polyethylene fluff was collected in the amount and with properties as specified in table 1.

**Example 4**

A procedure identical to example 3 was followed, except that the amount of hydrogen used, was changed from 5 Nl to 10 Nl. The results are shown in table 1.

**Example 5**

A procedure identical to example 3 was followed, except that the amount of hydrogen used, was changed from 5 Nl to 15 Nl. The results are shown in table 1.

**Example 6 and 7**

Ethylene polymerization with <u>**M2**</u> as a solid catalyst component

The respective procedures of examples 4 and 5 were repeated, except that the catalyst component <u>**M2**</u> used. The results are shown in table 1.

**Comparative examples C1 to C3**

A procedure analogous to examples 3 to 5 was followed respectively, except that catalyst <u>**U**</u>, which did not undergo the reaction substituting Ti-Cl bonds with the formation of Ti-Cp bonds, was used. The results of polymerization are shown in table 1.

**Example 8**

Preparation of solid catalyst component <u>**M3**</u>

A typical heterogeneous $MgCl_2$-supported Ziegler Ti-catalyst, containing 16.9 wt% Ti, 7.3 wt% Mg, 65.2 wt% Cl, and < 10 wt% diisobytylphtalate as an internal electon donor, (199.5 grams), was treated with 14.7 mL CpTMS in 1 l freshly distilled heptane for 20 hrs, under nitrogen flow, at 70°C in round bottom flask equiped with a nitrogen inlet and outlet. The evolvement of TMSCl was followed at the N2-outlet with the use of wet pH test paper, until completion of the substitution reaction, after which the catalyst component <u>**M3**</u> with a Ti/Cp ratio equal to 8 was recovered by filtration and heptane washings (3x 20 mL) and drying under $N_2$ atm.

**Example 9**

Ethylene polymerization with <u>**M3**</u> as a solid catalyst component

A polymerization procedure identical to example 6 was followed, except that the solid catalyst component <u>**M3**</u> was used in stead of <u>**M2**</u>. The result are shown in table 1.

**Example 10**

Preparation of cocatalyst component mixture <u>**C**</u>

A toluene solution containing the alkylaluminium cocatalysts and the Y-precursor component was prepared by mixing TIBAL (100 mL 1M toluene solution) with CpTMS (0.15 mL) to prepare a stock solution <u>**A**</u>. Solution <u>**A**</u> (5 mL) was mixed with TIBAL (5 mL 1M toluene solution) to prepare solution <u>**B**</u>. A cocatalyst component mixture <u>**C**</u> containing TIBAL and Y-precursor CpTMS, as a toluene solution, was prepared by mixing <u>**B**</u> (5 mL) with TIBAL (5 mL toluene solution).

**Example 11**

<u>Ethylene polymerization with solid catalyst component **N3** prepared in situ</u>

A polymerization procedure identical to comparative example C1 was followed, except that cocatalyst component mixture **C** was used in stead of TIBAL, in order to prepare in situ a catalyst component **N3** with Ti/Cp=8, and that the amount of $H_2$ was changed from 5 Nl to 15 Nl. The polymerization results are shown in table 1.

**Example 12**

<u>Preparation of cocatalyst component mixture **E**</u>

A toluene solution containing the alkylaluminium cocatalyst and the Y-ligan-precursor component was prepared by mixing TIBAL (50 mL 1M toluene solution) with tert-butylcyclopentadienyltrimethylsilane ($^t$BuCpTMS) (0.21 mL) to prepare a stock solution **D**. Solution **D** (5 mL) was mixed with TIBAL (34.8 mL 1M toluene solution) to prepare **E** as a cocatalyst component mixture containing TIBAL and Y-ligand-precursor $^t$BuCpTMS, as a toluene solution.

**Example 13**

<u>Ethylene polymerization with solid catalyst component **O3** prepared in situ</u>

A polymerization procedure identical to comparative example C1 was followed, except that cocatalyst component mixture **E** was used in stead of TIBAL, in order to prepare in situ a catalyst component **O3** with Ti/Cp=8, and that the amount of $H_2$ was changed from 5 Nl to 15 Nl. The polymerization results are shown in table 1.

**Example 14**

<u>Preparation of cocatalyst component mixture **F**</u>

A toluene solution **F** containing the alkylaluminium cocatalyst and the Y-ligand-precursor tributyltincyclopentadiene (TBTCp) was prepared by mixing TIBAL (17.6 mL 1M toluene solution) with TBTCp (13.8 mg).

**Example 15**

<u>Ethylene polymerization with solid catalyst component **P3** prepared in situ</u>

A polymerization procedure indentical to comparative example C& was followed, except that cocatalyst component mixture **F** was used in stead of TIBAL, in order to prepare in situ a catalyst component **P3** with Ti/Cp=8 , and that the amount of $H_2$ was changed from 5 Nl to 15 Nl. The polymerization results are shown in table 1.

**Example 16**

<u>Ethylen polymerization with solid catalyst component **R3** prepared in situ</u>

A polymerization procedure identical to comparative example C1 was followed, except that the TIBAL cocatalyst (2 mL 1M toluene solution) was mixed with Y-ligand-precursor triphenylphosphonium cyclopentadienylide (TPPCp) (5.8 mg) in order to prepare a cocatalyst component mixture **H** which prepares in situ in the reactor a catalyst component **R3** with Ti/Cp=2 . Also the amount of $H_2$ was changed from 5 Nl to 10 Nl. The polymerization results are shown in table 1.

Table 1

| Ex. | $H_2$ (vol%) | Productivity (g PE/g.hr) | $MI_2$ (g/10') | HLMI (g/10') | Density g/cc | Ti/Cp |
|-----|------|--------------|---------|--------|---------|-------|
| 3 | 5 Nl | 26455 | (*) | (**) | 0.9364 | 2 |
| 4 | 10 Nl | 22800 | (*) | 0.27 | 0.9431 | 2 |
| 5 | 15 Nl | 19385 | 0.69 | 32.39 | 0.9574 | 2 |
| 6 | 10 Nl | 21430 | (*) | 3.04 | 0.9488 | 4 |
| 7 | 15 Nl | 17910 | (*) | 26.34 | 0.9521 | 4 |
| C1 | 5 Nl | 22000 | (*) | 7.09 | 0.9533 | |
| C2 | 10 Nl | 16500 | 1.47 | 63.5 | 0.9610 | |
| C3 | 15 Nl | 9800 | 21.11 | n.d. | > 0.96 | |
| 9 | 10 Nl | 21500 | 0.30 | 10.44 | 0.9568 | 8 |
| 11 | 15 Nl | 23300 | (*) | 1.78 | 0.9527 | 8 |
| 13 | 15 Nl | 20100 | 0.64 | 24.78 | 0.9589 | 8 |
| 15 | 15 Nl | 18860 | 1.28 | n.d. | 0.9580 | 8 |
| 16 | 10 Nl | 21700 | 1.30 | 64.20 | 0.9593 | 2 |

(*)    : $MI_2$ < 0.1 g/10 min.

(**)   : HLMI < 0.1 g/10 min.

n.d.   : not determined

## Claims

1.  Process for preparing an olefin (co)polymerization catalyst component which comprises the step of :

    -    contacting a supported Ziegler-Natta catalyst component comprising a halogen derivative of a transition metal (Me) of Group IVb supported on a finely divided halogen derivative of Mg with a solution of a compound of general formula

$$L_x E_y R_z$$

    wherein

        L is an organic ligand which comprises a cyclopentadienyl, an indenyl, a fluorenyl or substituted derivates

6

EP 0 585 512 B1

thereof,

E is a metallic, non-metallic or amphoteric element of group IIA, IIIA, IVA, or VA of the periodic table,

R is an aliphatic, cycloaliphatic, aromatic, polyaromatic or heterocyclic group,

and wherein x, y, z are integers, the value of which is comprised between 0 and 4 with the proviso that x and y are comprised between 1 and 4, optionally in the presence of an alkylaluminium under reaction conditions comprising a temperature comprised between -80°C and 220°C,

- forming Me-L bonds in replacement of Me-Hal bonds so as to obtain Me/L ratio comprised between 0.15 and 18, and

- recovering the catalyst component so obtained.

2. Process according to claim 1, wherein L is a cyclopendienyl or a trialkylsilyl substituted derivative thereof.

3. Process according to any one of claims 1 and 2 wherein E is selected from Si, Sn or P.

4. Process according to any one of claims 1 to 3 wherein R is a hydrocarbyl radical having from 1 to 4 carbon atoms.

5. Process according to any one of claims 1 to 4 wherein the Me/L ratio is comprised between 1 and 12.

6. Process according to any one of claims 1 to 5 wherein the transition metal of Group IVb is titanium.

7. Process according to any one of claims 1 to 6 wherein the reaction conditions include a temperature comprised between -80°C and 220°C and preferably between 50°C and 100°C.

8. Process according to any one of claims 1 to 7 wherein x, y and z have a value between 1 and 4.

9. Process according to claim 8, wherein X=1 and y=1.

10. Process for the (co)polymerization of alpha-olefins in the presence of a catalyst system comprising :

   a) a catalyst component prepared in accordance with the process of any one of claims 1 to 9

   b) an alkylaluminum compound as cocatalyst which may already be present during preparation of said catalyst component

   c) optionally an external electron donor.

11. Process according to claim 9 wherein ethylene is copolymerised with co-monomers selected from alpha-olefins or diolefins having from 3 to 20 carbon atoms.

12. Process according to any one of claims 10 or 11, when applied to the copolymerization of ethylene with other alpha-olefins having 3 to 8 carbon atoms.

**Patentansprüche**

1. Verfahren zum Herstellen einer Olefin (co)polymerisationskatalysatorkomponente, welches die Stufe umfaßt:

   - in Berührung bringen einer unterstützten Ziegler-Natta Katalysatorkomponente, umfassend ein Halogenderivat eines Übergangsmetalls (Me) von Gruppe IVb, unterstützt auf einem fein verteilten Halogenderivat von Mg, mit einer Lösung einer Verbindung der allgemeinen Formel:

$$L_x E_y R_z$$

   wobei

7

L ein organischer Ligand ist, welcher ein Cyclopentadienyl, ein Indenyl, ein Fluorenyl oder substituierte Derivate davon umfaßt,

E ein metallisches, nicht metallisches oder amphoteres Element der Gruppe IIA, IIIA, IVA oder VA der Periodentafel ist,

R eine aliphatische, zykloaliphatische, aromatische, polyaromatische oder heterozyklische Gruppe ist, und wobei x, y, z ganze Zahlen sind, deren Wert zwischen 0 und 4 enthalten ist, unter der Voraussetzung, daß x und y zwischen 1 und 4 enthalten sind, gewünschtenfalls in der Anwesenheit eines Alkylaluminiums unter Reaktionsbedingungen, die eine Temperatur umfassen, die zwischen -80°C und 220°C enthalten ist,

- Bilden von Me-L Bindungen als Ersatz von Me-Hal Bindungen, wodurch ein Me/L Verhältnis erhalten wird, das zwischen 0,15 und 18 enthalten ist, und
- Gewinnen der auf diese Weise erhaltenen Katalysatorkomponente.

2. Vefahren nach Anspruch 1, wobei L ein Cyclopentadienyl oder ein Trialkylsilyl substituiertes Derivat davon ist.

3. Verfahren nach einem der Ansprüche 1 bis 2, wobei E aus Si, Sn oder P ausgewählt wird.

4. Verfahren nach einem der Ansprüche 1 bis 3, wobei R ein Hydrocarbylrest mit 1 bis 4 Kohlenstoffatomen ist.

5. Verfahren nach einem der Ansprüche 1 bis 4, wobei das Me/L Verhältnis zwischen 1 und 12 enthalten ist.

6. Verfahren nach einem der Ansprüche 1 bis 5, wobei das Übergangsmetall der Gruppe IVb Titan ist.

7. Verfahren nach einem der Ansprüche 1 bis 6, wobei die Reaktionsbedingungen eine Temperatur umfassen, die zwischen - 80°C und 220°C und vorzugsweise zwischen 50°C und 100°C enthalten ist.

8. Verfahren nach einem der Ansprüche 1 bis 7, wobei x, y und z einen Wert zwischen 1 und 4 haben.

9. Verfahren nach Anspruch 8, wobei x = 1 und y = 1.

10. Verfahren für die (Co)polymerisation von alpha-Olefinen in der Gegenwart eines Katalysatorsystems, umfassend:

a) eine Katalysatorkomponente, hergestellt in Übereinstimmung mit dem Verfahren nach einem der Ansprüche 1 bis 9,

b) eine Alkylaluminiumverbindung als Cokatalysator, welche schon während der Herstellung der Katalysatorkomponente vorhanden sein kann,

c) gewünschtenfalls einen externen Elektronendonator.

11. Verfahren nach Anspruch 9, wobei Ethylen mit Comonomeren, ausgewählt aus alpha-Olefinen oder Diolefinen mit 3 bis 20 Kohlenstoffatomen copolymerisiert wird.

12. Verfahren nach einem der Ansprüche 10 oder 11, wenn auf die Copolymerisation von Ethylen mit anderen alpha-Olefinen mit 3 bis 8 Kohlenstoffatomen angewendet.

**Revendications**

1. Procédé pour préparer un composant de catalyseur de (co)polymérisation d'oléfines, qui comprend les étapes consistant à:

- mettre un composant de catalyseur de Ziegler-Natta déposé sur un support, comprenant un dérivé halogéné d'un métal transitoire (Me) du groupe IVB déposé sur un support comprenant un dérivé halogéné finement divisé de Mg, en contact avec une solution d'un composé répondant à la formule générale

$$L_x E_y R_z$$

dans laquelle

L représente un ligand organique qui comprend un groupe cyclopentadiényle, un groupe indényle, un groupe fluorényle ou un de leurs dérivés substitués,

E représente un élément métallique, non métallique ou amphotère du groupe IIA, IIIA, IVA ou VA du tableau périodique,

R représente un groupe aliphatique, cycloaliphatique, aromatique, polyaromatique ou hétérocyclique,

et dans laquelle x, y, z représentent des entiers dont la valeur est comprise entre 0 et 4, avec cette réserve que x et y sont compris entre 1 et 4, le cas échéant en présence d'un composé d'alkylaluminium dans des conditions réactionnelles comprenant une température comprise entre -80 °C et 220°C,

- former des liaisons Me-L en remplacement des liaisons Me-Hal de façon à obtenir un rapport Me/L compris entre 0,15 et 18, et

- récupérer le composant de catalyseur ainsi obtenu.

2. Procédé selon la revendication 1, dans lequel L représente un groupe cyclopentadiényle ou un de ses dérivés substitués par un groupe trialkylsilyle.

3. Procédé selon l'une quelconque des revendications 1 et 2, dans lequel E est choisi parmi le groupe comprenant Si, Sn ou P.

4. Procédé selon l'une quelconque des revendications 1 à 3, dans lequel R représente un radical hydrocarbyle contenant de 1 à 4 atomes de carbone.

5. Procédé selon l'une quelconque des revendications 1 à 4, dans lequel le rapport Me/L est compris entre 1 et 12.

6. Procédé selon l'une quelconque des revendications 1 à 5, dans lequel le métal transitoire du groupe IVB est le titane.

7. Procédé selon l'une quelconque des revendications 1 à 6, dans lequel les conditions réactionnelles englobent une température comprise entre -80°C et 220°C, de préférence entre 50°C et 100°C.

8. Procédé selon l'une quelconque des revendications 1 à 7, dans lequel x, y et z possèdent une valeur entre 1 et 4.

9. Procédé selon la revendication 8, dans lequel x = 1 et y = 1.

10. Procédé pour la (co)polymérisation d'alpha-oléfines en présence d'un système de catalyseur comprenant:

a) un composant de catalyseur préparé conformément au procédé selon l'une quelconque des revendications 1 à 9,

b) un composé d'alkylaluminium à titre de cocatalyseur qui peut déjà être présent au cours de la préparation dudit composant de catalyseur,

c) le cas échéant, un donneur d'électrons externe.

11. Procédé selon la revendication 9, dans lequel on copolymérise de l'éthylène avec des comonomères choisis parmi des alpha-oléfines ou des dioléfines contenant de 3 à 20 atomes de carbone.

12. Procédé selon l'une quelconque des revendications 10 ou 11 lorsqu'on l'applique à la copolymérisation d'éthylène avec d'autres alpha-oléfines contenant de 3 à 8 atomes de carbone.